# EUROPEAN PATENT SPECIFICATION

(11) **EP 1 410 595 B1**
(45) Date of publication and mention of the grant of the patent: **29.09.2010**
(21) Application number: 01925614.8
(22) Date of filing: 06.04.2001
(51) Int. Cl.: H04L 29/06, G06F 17/30, H04L 12/66

(54) **PROVIDING SERVICES WITH SERVER IN TCP/IP NETWORK**
DIENSTBEREITSTELLUNG MIT SERVER IN TCP/IP-NETZWERKEN
FOURNITURE DE SERVICES PAR UN SERVEUR DANS UN RESEAU TCP/IP

(30) Priority: 07.04.2000 FI 20000837
(43) Date of publication of application: 21.04.2004
(73) Proprietor: Domiras Oy, 01730 Vantaa (FI)
(72) Inventor: MÄKIPÄÄ, Risto, FIN-50670 Otava (FI)
(74) Representative: Äkräs, Tapio Juhani
(86) International application number: PCT/FI2001/000343
(87) International publication number: WO 2001/078350

(56) References cited:
- EP-A1- 0 786 728
- WO-A1-01/01712
- WO-A2-99/07152
- US-A- 5 832 219
- US-A- 5 956 509
- US-A- 5 987 480

## Description

The invention relates to providing services from a server in a TCP/IP network to different subscriber terminals.

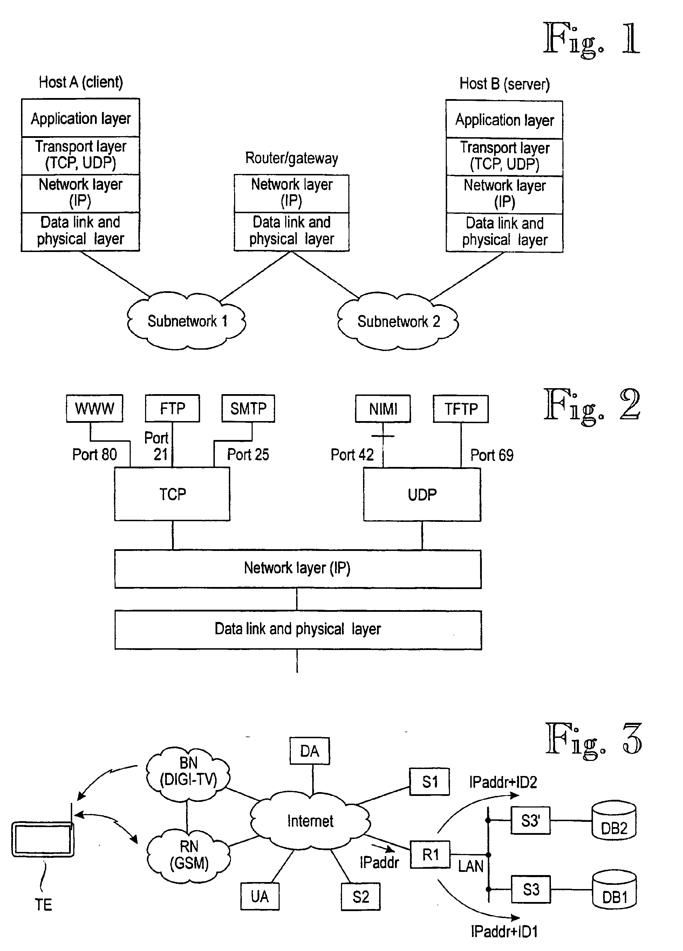

The Internet is simply the network of networks, which supports TCP/IP (Transport Control Protocol/Internet Protocol) based applications, such as a World Wide Web (WWW), Simple Message Transport Protocol (SMTP) e-mail or File Transfer Protocol (FTP). The parts of the Internet are usually called subnetworks that have been Interconnected by gateways or routers. Computers connected to the network are called hosts. One host is usually a client while another one is a server. A computer requesting or receiving services from a computer in another network is called a client. A server is a computer which provides services to other computers in the network. US5956509 discloses a remotely located client that sends a remote request to a server via a gateway. EP0786728 discloses a service providing system with a plurality of information acquiring computers and information providing computers connected to a network. Figure 1 illustrates a TCP/IP protocol structure (according to an OSI model) and subnetworks, a router and host computers.

In the bottom of a protocol stack there is provided a physical layer, which refers to the actual transfer medium over which data is transferred as electrical impulses or other such suitable signals. A host computer is connected to the transfer medium by a network adapter. A data link layer comprises an interface to the network adapter and maintains a logical link to a subnetwork. Every network adapter has a unique and permanent physical address. In the lowest level, equipment-dependent protocols deliver data within the physical network, using the physical addresses of the adapters. Examples of network architectures of the physical data link layer include Ethernet, Asynchronous Transfer Mode (ATM) and Frame Relay.

A network layer, or an Internet layer, is a layer in which the IP protocol provides logical, equipment-independent address processing so as to enable data to be transmitted from one subnetwork to another even if different technologies were used in the lower layers of the subnetworks. The IP protocol is a packet-switched protocol which is mainly responsible for routing IP packets over the Internet to their final destination and for informing the destination of the source. Therefore, a header of an IP packet comprises an IP source address and an IP destination address to unambiguously identify the original source and the final destination. The source and destination addresses remain unchanged while the IP packet travels from the source to the destination. The TCP/IP networks use 32-bit addresses to identify the host computer and the network to which the host is connected. In other words, the IP address comprises the address of the network and the address of the host. The TCP/IP uses protocols called Address Resolution Protocol (ARP) and Reverse Address Resolution Protocol (RARP) to link these logical IP addresses to the actual physical addresses of the network adapters. An IP packet (datagram) also comprises the address (number) of the protocol (TCP, UDP, ICMP) of the transport layer to which the receiving computer is to forward a payload.

A transport layer lies between a network and application layer applications. The most important protocols of the transport layer include a Transport Control Protocol (TCP) and User Datagram Protocol (UDP), which enable a particular application to be set as the destination of the data in the IP packets. To be more precise, applications are connected to TCP and UDP protocol modules through "ports", each port being provided with a unique number, as illustrated in Figure 2. The ports are fixedly allocated to certain popular client/server applications at the server end, the allocation being standardized to cover the entire Internet. Such ports are called well-known ports, and they enable a service application being compelled to advertise its port number before communicating to be avoided. When a client transmits an IP packet, it simply inserts the known port number of the destination application (server) into the destination port field of the UDP or TCP header and the free, unknown port number of the client into the source port field. When the server receives the first packet, the server is thus informed of the port number associated with the client application. The different traffic streams of the end applications communicating with each other can thus be distinguished from each other using a combination of five different identifiers; IP source address, source port, IP destination address, destination port and transport layer protocol (TCP, UDP). When examining two packets, if one or more of these identifiers are different, the packets belong to different traffic streams. Examples of known TCP ports for the most common applications include port 21 for FTP applications, port 80 for WWW services (Hypertext Markup Language HTML), port 23 for Telenet services and port 25 for the SMTP e-mail protocol. Known UDP ports include port 42 for a name service and port 69 for a TFTP (Trivial FTP) service. In connection with ports, also sockets are usually mentioned. A socket is an address which is formed by combining an IP address and a port number. For example, socket 111.121.131.141.80 refers to port 80 of a computer whose IP address is 111.121.131.141. A socket address is thus an unambiguous identifier of an application operating on a server.

It is to be noted that a host computer may also be a remote workstation connected through a modem connection or the like to a dial-up server connected to the TCP/IP network. Dial-up protocols, such as a Serial Line Internet Protocol (SLIP) and Point-to-Point Protocol (PPP), are then generally used in the network layer between the remote workstation and the dial-up server. As far as the IP layer and the higher layers are concerned, this, however, is a very similar situation to that in Figure 1, when the dial-up server is considered as operating as a router and a subnetwork 1 is the modem connection.

An application layer comprises applications for detecting failures, transferring files, remote controlling a network and for Internet functions. The application layer also comprises application programming interfaces (API), which enable application programs operating above a certain operating system to use the network. However, the applications and different operating systems and/or APIs required from the applications by different client devices and terminals cause problems particularly to the service providers. In the following, new multimedia applications will be examined by way of example.

New digital broadcast networks have been developed all over the world for delivering radio and television broadcasts. Such networks include e.g. a digital radio network called Digital Audio Broadcasting (DAB) and a digital television network called Digital Video Broadcasting (DVB). DAB and DVB systems also comprise bidirectional, interactive services that enable e.g. chargeable services to be subscribed to or feedback information on a service to be transmitted from a terminal in a network. Such interactive services include e.g. electric commerce, different games and video-on-demand services. This requires that the terminal also comprises means for transmitting data on a return connection, i.e. transmitting data to a broadcast network. Typically, a terminal is then provided with a wired connection to a fixed network, such as a Public Switched Telephone Network (PSTN), from which a further connection is arranged to a DAB or DVB network. The return connection can also be arranged using a cable or a wireless connection, such as a wireless local area network or a mobile communication network. The return connection enables different information, which can be any data, to be selected to be broadcast. Typically, the image or voice information to be broadcast is obtained from the servers of the network of the service provider, such as a television broadcast company. WO9907152 discloses a method for forming service selection data, such as a program guide, from a service identification and control data located in multiplexed frames used for transmitting the respective services.

As the wireless data transfer technologies advance, more and more services are shifted to be carried out through different wireless telecommunication networks. Technical limitations of the wireless data transfer explain why different networks have typically been developed for different services. For example, it is reasonable to implement broadband wireless data transfer directed to one terminal technically as a short-range network only. In order to utilize the services of each network, network-specific applications have typically been developed that can typically only be used by terminals separately designed for the network. Furthermore, each network is typically provided with unique interfaces between terminals and different network elements. The recent trend in order to converge different wired and wireless services has introduced new solutions for integrating different terminals. For instance, an extension card connected to a personal computer (PC) enables digital broadcast services, such as DAB or DVB, to be received. Solutions are also known wherein a computer and an interface card to a Wireless Local Area Network (WLAN) are connected to a single terminal. Solutions for connecting a local area network card have also been provided for a mobile station in a cellular radio network, such as a GSM network. The terminal to receive broadcasts can be e.g. a "Set-Top Box" (STB). The STB device enables digital broadcasts or Internet services to be received by the existing analogue TV and radio receivers. The received broadcast is demodulated, decoded and demultiplexed at the terminal. The typically source encoded signal thus obtained can be further deconstructed into actual information e.g. by decoding the MPEG-2 coding.

The convergence of different telecommunication networks and services and integration of terminals enable services conventionally provided by a certain network to be received through another network. For example, a computer is able to receive digital radio and TV broadcasts through an Internet connection by means of the access cards mentioned above. Similarly, connecting a broadband wireless local area network card to a mobile station enables video image to be received through a conventional mobile station. A tendency that can be clearly discerned in this process is to provide, in the future, services provided by different networks through the Internet, either with or without wires.

In digital data transfer, audio and video constitute packet streams interleaved into each other in terms of time by multiplexing. In the digital video broadcasting (DVB), these packet streams are called elementary streams. Some of the DVB packets may contain time stamps, which are used for constructing the original real time image by image, i.e. the relationship between presentation and time. For example, a mere audio signal necessitates a "presentation time stamp" while synchronized image and voice require "lip sync" synchronized with the same master clock. In the DVB transmission, elementary stream packets are placed in a broadcast transmission channel, i.e. a satellite or a terrestrial distribution channel. Prior to coding according to the transmission channel, the elementary stream packets are "normal" packets having a fixed number of bits, which can be transmitted through any transmission network. The network is only required to be able to provide enough transmission capacity for reconstructing the real-time time axis at a receiver.

An MPEG4 standard is a system for arranging multimedia presentations containing moving image and voice. The standard is sufficiently provided with information so as to initialize a terminal for a multimedia event and also with specifications for initializing the memory and transmission path interface necessary for the event. In the elementary streams, a multimedia presentation is separated into parts, each elementary stream containing a different aspect of information. Information types include object description, image and voice data of one object, stage description and information on the contents of an object. An MHEG2 (Multimedia Hypermedia Expert Group) has specified a simpler hypermedia language, which is also optionally able to utilize an MPEG2 hardware decoder. An SMIL (Synchronized Multimedia Integration Language) is an international WWW consortium recommendation for constructing a multimedia presentation. It can be an alternative to the MHEG in HTML based programming interfaces (API). It can be said that the MPEG2 is a multimedia storage format like MID, WAV, MP3 or AVI and MPEG4 are. The presentation an MPEG file requires a presentation program. The presentation program for an Internet Explorer browser is Microsoft Media Player. This, however, requires the entire file to be downloaded into the memory of the terminal before the program is able to deconstruct it into a multimedia presentation.

However, the streaming formats mentioned above enable multimedia to be presented according as a client device receives data. For example, Stream Works software by Xing Technologies Inc. is based on the MPEG4, also supporting an IP multicast service. As the transmission capacity of information networks increases, the transmission capacity required by MPEG2 video and audio will no longer be problematic either.

As far as the terminals (generally client devices) are concerned, the problem with the multimedia presentation formats described above is the high processing capacity they require. A terminal in a fixed broadband network is able to process decoded multimedia presentations by software. In small and portable, usually wireless terminals, on the other hand, the limited capacity presents a problem. A small display, for example, is already a special limitation. Similarly, the display sets limitations in Internet solutions wherein a conventional television receiver operates as the display.

As the mobile telecommunication and DVB services develop, new multimedia services will be introduced that operate e.g. on top of a Java machine or an MPEG machine (API), whereas in personal computers (PC) the most common operating system is Windows. New operating systems for mobile stations include EPOC and Windows CE. A WWW-type WAP (Wireless Application Protocol) protocol and a WML (Wireless Markup Language) have also been provided for wireless devices. The features of the terminals do vary e.g. in mobile communication networks and in a wired telecommunication network, and it is thus natural to develop unique operating systems and programming interfaces (API) that are best suited each for their own environment. The operating systems and application interfaces (API) for mobile devices optimize application access to the resources of a device. In client devices, the API of the device operates as a software interface to the telecommunication and other resources of the device. As far as the applications are concerned, these are similar programming interfaces (API) e.g. to those in Java and MHEG digital television receivers, whose run time version operates in the client device when services are being used. The IP packets provide information on the application to be used according to the TCP port number. HTTP or FTP applications, for example, have their own port numbers, the applications themselves being responsible for supporting multimedia presentations. Same applications and multimedia presentation methods are, however, used in different operation system and software interface environments. The features of the terminals differ so much from each other that, in order to be able to utilize services, the file storage format to be selected and transmitted in response to service requests has to conform with the software environment of the client device. As far as the service provider is concerned, however, the situation is more problematic. The aim is to provide the users of different telecommunication networks with same content services, most preferably even from the same server and a single Internet address. In principle, this is feasible since the terminals in more and more networks have Internet capability, being capable of communicating with a server connected to the Internet. It is simple, as such, e.g. to transfer a multimedia presentation from a server to a terminal according to the TCP/IP routing principles described above. The problem is, however, the way in which a multimedia presentation can be transmitted to mobile terminals or fixed terminals equipped with multimedia encoders implemented by different software or hardware such that the transmitted multimedia presentation is presented by an appropriate standard enabling a particular terminal to process the presentation. The current solutions do not by any means enable the server to find out the application layer standard or technology used by the terminal and to conform its transmission therewith. The only way is to use different IP addresses or servers for different kind of terminals, to which the terminals themselves must be able to transmit a service request. It could also be possible to identify packets supplied from different networks and to route them to the correct servers or applications by analysing the network identifiers of the source addresses of the IP packets.

An object of the invention is to enable a service to be transmitted from a server to a client device in the form selected according to the features of the client device.

This is achieved by a method for implementing a service from a server to client devices having different features, the method comprising the steps of a client device transmitting an Internet Protocol (IP) packet comprising an IP header, a transfer protocol layer header and application layer data; routing the IP packet to the server according to a destination address of said IP header; transferring, at the server, the transport layer header and the application layer data from the IP layer to the transport layer protocol according to a protocol identifier of said IP header; transferring, at the server, the application layer data from the transfer protocol layer to the application layer according to a port number contained in said transfer protocol layer header. The method is **characterized in that** the client device (TE) includes, in the IP packet it transmits, information on a software interface (API) used by the applications of the client device requesting a service, and said information is used at the server for selecting and/or configuring either a file requested by the client device or an application interacting with the client device such that the service is provided in the form required by the features of the particular client device which requested the service.

This object is also achieved by a terminal and a server according to claims 8 and 9.

The idea underlying the invention is that a client device, such as a terminal in a telecommunication network, includes, in an IP packet it transmits, information on the features of the client device requesting a service. This information may reveal e.g. what kind of operating system or application programming interface (API) the client device uses. In a preferred embodiment of the invention, the information is an identifier whose certain values are arranged to refer to a certain feature or a combination of features of the client device or the application. This information is forwarded in the IP packet to the server to be utilized in selecting a suitable application for configuration such that the service is provided in the form required by the features and/or application of the particular client device requesting the service. Thanks to the invention, as far as a service provider is concerned, different networks are integrated into a single whole such that when the operator connects a server to a network, the server, based on the IP, is able to serve requests supplied through the same fixed Internet connection since the payload of the services can be transmitted in a standard form understood by a particular terminal. There is no need for the service provider to set up any extra network service interfaces in order to reach the clients which access the IP world through different networks.

When the identifier information according to the invention is used in the IP packet in addition to the known port numbers and protocol numbers, the server is also able to serve "conventional" clients, which do not support the functionality of the invention. If the IP packet received by the server contains no identifier information, the server provides the service typically referred to by the known port number or protocol number of the IP packet. If the packet does contain the identifier information, the client will receive a service customized according to its wishes. The terminal, in turn, may always add the identifier information to the IP packet and be ensured that it will, however, receive the service at least in the form according to the "known" port number if the server should not support the special format desired by the terminal. In other words, some kind of service will always be ensured.

The information or identifier according to the invention can, in principle, be included in any part of the IP packet. It may be included e.g. in the IP header, transport layer header or in the application layer data itself. The IP header or the transport layer header may employ suitable undetermined bit positions or fields, or parameters already being used may be given new values.

In an embodiment of the invention, when the identifier information on the software interface below the application is included in the application data, the application layer itself can be configured to support providing the service and selecting the file to be transmitted to the client in a form suitable for the client device that transmitted the service request. In an embodiment of the invention, SLP (Service Location Protocol) or the like is used for making a server providing a suitable service easier to find for the terminal. Available services, different formats thereof and port numbers, protocol numbers and/or identifiers to be used for requesting different services and different service formats are stored in connection with a directory agent. When a user of the terminal is to establish a connection to a particular service, it issues, directly or indirectly, a service request to the directory agent. The user of the terminal does not need to know any detailed information on said service, such as at which network address the service is available or the telecommunication parameters used. In the service request issued, the user of the terminal can specify different attributes of the desired service, such as the service type, network protocols and service formats supported by the terminal, and certain information concerning the features of the software interface of the terminal that affects the selection of the service format. The directory agent searches through the services registered therein for the service description specified by the service request. If a service according to the service request is available, the directory agent returns the service information, such as the URL address, on the servers providing the particular service. This method for finding a server is particularly suitable when a terminal should know a certain port number or a protocol number in order to receive a service in a correct form from the server.

Another object of the invention is to enable a multicast and broadcast service to be transmitted in a form on the basis of which a client device is able to download a correct application interface and application so as to present the service to the client in a correct form.

This is achieved by a method according to claim 15, server according to claim 17, and a terminal according to claim 18.

Herein, the basic principle of the invention, i.e. an application programming interface identifier, is applied in an opposite direction, i.e. for controlling a client device from a server. When the server transmits its services in the broadcast or multicast form, the server includes, in the IP packet it transmits, information on the software interface below the application used for presenting the service, and that said information is used at a client device for configuring and/or downloading the application and application programming interface from the client device or the network.

When transmission is carried out directly from a media server of a broadcast network, e.g. in a DVB or DAB multiplex, the software interface identifier can also be placed in the identifier information on a multiplexed broadcast frame, in which case the client device (broadcast receiver) is able to download a correct software interface and application or a protocol program from its memory or the network.

While receiving the service, the client device can thus select a software environment according to the service for both the API and the application as well. For example, a request message supplied from a Wireless Application Protocol (WAP) network to an Internet WWW server through a WAP proxy or a gateway may be supplied from a mobile terminal having a standardized WAP protocol stack per se, but since mobile WAP terminals employ different software interfaces and therefore also different applications, the request should preferably contain information indicating which software interface (e.g. EPOC or Windows CE) or even which software interface version the device uses. When this software interface is known, it is also possible to download necessary "plug-ins", i.e. software modules suitable for the software interface of the client device, from servers on the Internet by utilizing the software interface identifier according to the invention so as to present the service content itself.

Yet another aspect of the invention is a routing method according to claim 19 and a router according to claim 21.

The identifier information according to the invention can also be used for routing an IP packet in a network. Depending on the identifier information, an IP packet having the same IP address can be routed in different ways in an embodiment of the invention: In the service provider's own local area network, two or more servers (possibly virtual) can be accessed using the same IP address. Routing to a correct server within a network is determined according to the identifier information of the invention.

In the following, the invention will be explained by means of the preferred embodiments and with reference to the accompanying drawings, in which

Figure 1 illustrates a TCP/IP protocol structure and subnetworks, a router and host computers,

Figure 2 shows a protocol stack illustrating how a transport layer is divided into TCP and UDP protocol modules, and ports through which these are connected to application layer applications,

Figure 3 shows a telecommunication system whereto the invention can be applied,

Figure 4 is a protocol stack according to a preferred embodiment of the invention,

Figure 5 is a protocol stack according to a preferred embodiment of the invention, wherein a port from the transport layer to the application layer is selected on the basis of an identifier according to the invention and a received port number,

Figure 6 is a flow diagram illustrating a process according to the invention, which operates in the transport layer in the embodiment of Figure 4,

Figure 7 is a protocol stack according to another embodiment of the invention, wherein a network layer selects a protocol identifier and a transport layer protocol module on the basis of information according to the invention, and

Figure 8 is a flow diagram of a process implementing the operation of a network layer of the invention in the embodiment of Figure 7.

The present invention is suitable for use in all telecommunication systems wherein a client device, typically a terminal in a telecommunication network, is able to communicate through a TCP/IP protocol stack with a server connected to the same or another network. The server may be e.g. a server generally providing services on the Internet, and the client a terminal in a wired or wireless telecommunication network.

Figure 3 illustrates a telecommunication system comprising a network BN providing broadcasts to a terminal TE, and a network RN providing a return connection to the terminal. Information is delivered to the terminal TE as a broadcast via the Internet from servers S1 and S2 or from servers S3 and S3' connected to a local area network Lan.

The terminal TE receives broadcasts from the broadcast network BN. Typically, a broadcast comprises information presented by means of an electronic programming guide (EPG) on services and programs that can be selected by a user. The terminal TE preferably shows the information by means of a browser-type user interface wherein different information sources are linked (cf. hyperlinks in a WWW browser). The information can be divided into services which do not require a return connection to be set up and into services which do require a return connection to be set up. A return connection must also be set up if the user desires to receive services elsewhere than from the network BN.

When the user is to transfer information, such as a multimedia presentation, from the server S1, S2 or S3 connected to the Internet via a high-speed broadcast, the TE delivers a request for a return connection to be set up via the Internet to a particular server S1, S2 or S3 on the basis of an URL identifier (IP address) identifying the service.

The return connection can be arranged wirelessly e.g. via a GSM (Global System for Mobile communications) network or a wireless local area network. On the other hand, the return connection can also be arranged via a wired network, such as a cable network, a PSTN (Public Switched Telephone Network) network or an ISDN (Integrated Services Digital Network) network. The terminal TE comprises the necessary functions both for setting up a return connection and for receiving broadcasts, preferably integrated in a single device. The identifier of the network BN is stored in the terminal TE, e.g. on a smart card. A BSP is e.g. a digital television network (digital TV). In the future in particular, when the transmission rate of also the wireless networks is high enough (third generation mobile communication systems), the return network and the broadcast network can be a single network, and transmission can take place in both directions through the same connection.

If connection setup to the server S1 or S2 succeeds, information is delivered from the server to the IP address specified by the request. The information may comprise e.g. a file to be transmitted using a WWW page or an FTP protocol. The information is delivered to the terminal TE as a broadcast via the network BN. Preferably, the broadcast information is encrypted such that the encryption can be decrypted only by the terminal TE that selected the information through the return connection. This can be implemented e.g. by delivering the necessary keys for decrypting the encryption to the terminal TE. The keys necessary for decryption are preferably stored on a smart card, which makes it easy for the user to change his or her terminal. When information is broadcast to the terminal TE, the network BN encrypts the information, using an encryption key matching the decryption key of the TE.

A terminal TE to receive broadcasts can be e.g. a "set-top box" (STB). The STB device enables digital broadcasts or Internet services to be received by the existing analogue TV and radio receivers. The terminal TE may also be integrated into a computer e.g. by means of different PC receiver cards. Furthermore, the terminal can be a mobile station or it can be integrated into a mobile station. At the terminal TE, the received broadcast is demodulated, decoded and demultiplexed. The typically source encoded signal thus obtained can be further deconstructed into actual information e.g. by decoding the MPEG-2 coding.

An environment has been described above that is remarkably well suited to the invention. The invention is not, however, restricted to these networks; below, the invention will be described generally, without being connected to particular networks.

The basic principle of the invention is that a client device, e.g. host A in Figure 1 or the terminal TE in Figure 3, adds an identifier providing information on a software interface of the client device to an IP packet it transmits to a server (e.g. host B in Figure 1 or the server S1 in Figure 3), on the basis of which information the server knows in which form the data associated with a service should be transmitted to the client device. In principle, it is irrelevant to the invention at which point of the IP packet or in which form the information is transmitted. In practice, however, a manner is selected which complicates or changes the usual operation of the TCP/IP protocols as little as possible. Usually it is preferable to select a field or a bit position that has not been used before. The new facility of the invention is then invisible to devices which do not support it. It is also feasible to provide fields already being used with new values, but this may cause problems with servers not knowing the new value and the meaning thereof. The position at which the information is placed is sometimes also affected by the fact in which protocol layer the server utilizes the information. For example, it is not necessarily a good idea to place the information in the IP header if the information will not be used until in the TCP/UDP layer since the IP header will not be transmitted to the transport layer. The information must then be transmitted from a lower layer to a higher layer in some other way. In the preferred embodiments of the invention to be described below, some alternatives for placing the information in an IP packet will be suggested, but the invention is not to be restricted to these examples.

In the client device, the protocol stack (host A or the terminal TE) is in accordance with Figure 1. Furthermore, a new process is needed in the part of the program which adds the identifier information according to the invention. For example, if the identifier information is added in a network layer IP, the new process must then be added to the IP program, which composes an IP packet. The program can be configured to attach a certain identifier to the packets of a particular application while the application is being installed. An identifier can be added based e.g. on a port number. When the TCP/UDP transport layer receives data from a particular application port, a predetermined identifier is added to a corresponding IP packet.

Two versions of IP packets have currently been specified, version 4 (IPv4) and version 6 (IPv6). An IPv6 header can employ extension headers and particularly a destination options header. No exact use has yet been specified for this extension header, but it is meant to transfer information to be examined by a destination node (device). It is thus well suited to the purpose of the invention. An IPv4 header also comprises an options field of a varying length, which can be used for transmitting the identifier information of the invention. A TCP header comprises a 6-bit field reserved for later use; part of the field might possibly be used for the identifier information of the invention.

In a preferred embodiment of the invention, an application software interface process is selected or downloaded on top of a protocol layer of the transport layer (TCP or UDP) using an application software interface identifier (API identifier). A TCP or UDP software module can adapt the IP software module and the application software interface to each other, i.e. the TCP/UDP protocol software is downloaded at the server according to the software interface. Alternatively, the software interface is provided for the TCP/UDP software module, in which case the TCP/UDP protocol software module remains the same, regardless of the application software interface.

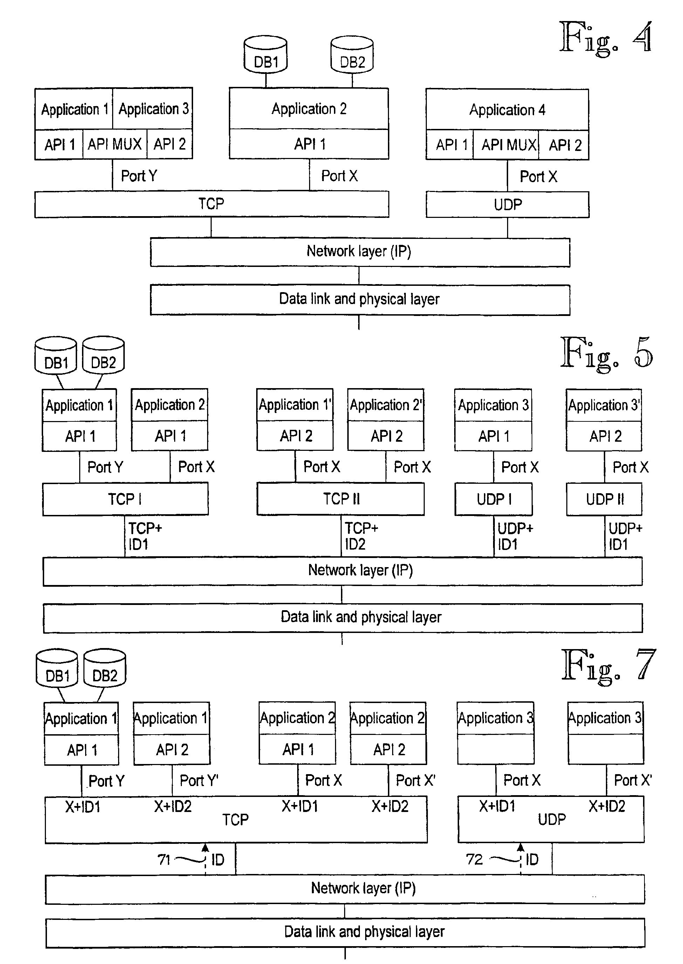

The preferred embodiment of the invention is illustrated in Figure 4 showing a protocol structure at a server end. TCP and UDP protocol module interfaces to the applications are provided by ports, which are specified by port numbers x and y. Lower protocol layers TCP, UDT, IP and a data link layer and a physical layer can then be completely standardized (cf. Figure 2). An application software module comprising two different applications 1 and 3 and two different software interfaces API1 and API2 to be selected or downloaded according to the API identifier of the invention is connected to TCP port Y. One application and one application programming interface API1 can be selected or downloaded through TCP port X. Similarly, UDP port X comprises application 4 and application software interfaces API1 and API2 to be selected or downloaded. A selection process, illustrated by API MUX in the figure, carries out the selection on the basis of the received API identifier. If the terminal transmits the API identifier in an IP packet in the application layer data, e.g. in the header of a protocol data unit (a packet or a frame) according to the particular service, the API MUX receives the API identifier directly in the application data. If, again, the API identifier is received in the header fields of the IP or transport layer, a lower protocol module extracts the API identifier from the IP packet and forwards it to the API MUX module. Generally speaking, the application software and the related "API software", possibly even a TCP/UDP module, are selected, downloaded or configured according to a received API identifier.

In the present application, the term "application programming interface API" should be understood broadly. It may contain an application programming interface (API), also an operating system on top of which the application has been implemented, and other facilities related to signal processing, use of lower protocol layer services or a service format suitable for the client device. In the present example, it is assumed that the API1 is an interface suitable for a terminal in a fixed network and the API2 is an interface suitable for a terminal in a wireless network. Another possible example is that the API1 is designated for terminals in a fixed broadband network that are able to process decoded multimedia presentations by software while the API2 is designated for terminals that are capable of processing multimedia presentations decoded by hardware. The API versions may also differ in that they are capable of supporting different multimedia objects and/or different stage descriptions.

When the API identifier information is in the application data (the data field of the IP packet), the application layer data of the received IP packet can be transmitted in a usual manner to a particular port to the application layer according to the received protocol number and port number. In Figure 4, two databases DB1 and DB2 are connected to application 2, the application layer selecting a file to be transmitted according to the API identifier from one of the databases. The databases provide e.g. different multimedia objects or stage descriptions. The application examines whether the received data contains an identifier ID, and on the basis of the identifier it selects which type of file is to be transmitted to the client. For example, an identifier ID1 may cause a file to be transmitted from the database DB1 whereas an identifier ID2 causes a file to be transmitted from the database DB2. If the user data contains no identifier ID, the default database DB1 is selected.

Application 2 of Figure 4 may be e.g. an application providing a WWW service (known TCP port 80). When the API layer or application 2 receives the API identifier in the application data from port x (port 80), on the basis of the API identifier it selects from its file hierarchy a file corresponding to the application software interface of the client, and thus the application, to be transmitted to the client. This basic principle of the invention can also be applied in the opposite direction by transmitting a multicast and broadcast service in a form on the basis of which the client device is able to download a correct application interface and application so as to present a service in a correct form to the client. For example, when the server S1 transmits its service in the broadcast or multicast form, the server includes, in the IP packet it transmits, information on the software interface API1 or API2 below the application used for presenting the service. The client device TE receiving the IP packet uses this information for configuring and/or downloading the application and application programming interface or the protocol program module (such as the TCP or UDP) either from the program memory of the client device or the network. This can take place as was explained in connection with the server with reference to Figure 4. The solutions described below with reference to Figures 5 to 8 can also be applied to the terminal. An example of a suitable application programming interface is a run time version for a Java machine, which is downloaded after the terminal has identified the software interface information from the received IP packet. An application supporting the Java machine, such as an HTTP application, is downloaded on top of the Java machine according to the port number of the application.

If the server is located in a broadcast network, as the BN in Figure 3, the server can include, in the identifier information on broadcast frames, information on the software interface below the application used for presenting the service. The client device TE uses this information for configuring and/or downloading the application and application programming interface or the protocol program as described above.

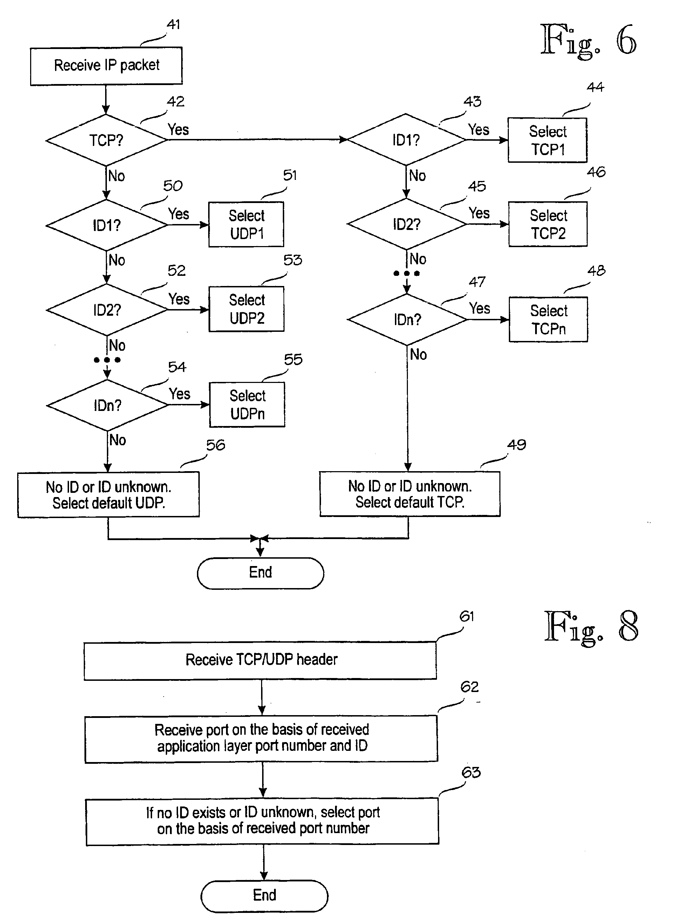

Figure 5 illustrates a protocol structure at a server end in an embodiment of the invention wherein the API identifier is transmitted in the IP header of the IP packet and the identifier information is used in the network layer in the IP protocol program module. The transport layer comprises two or more TCP protocol program modules TCP1 and TCP2 and two or more UDP protocol program modules UDP1 and UDP2. The TCP module TCP1 comprises port Y, to which application 1 equipped with the application programming interface API1 is connected. Port Y of TCP program module 2 is connected to application 1' equipped with a different interface API2. Applications 1 and 1' provide the same service, although in different formats, which is primarily determined by the functions illustrated on the interfaces API1 and API2. At their simplest, applications 1 and 1' can be similar except for the API interfaces, but in practice the differences may be greater. Ports X of the TCP program modules 1 and 2 are connected through the different interfaces API1 and API2 to different versions 2 and 2' of the same application. The same service is thus provided through the ports, only suited for different client device types or client applications. Similarly, ports X of the UDP program modules 1 and 2 are connected to different versions 3 and 3' of the same application through the different interfaces API1 and API2, in which case they provide the same service suited for different client devices or client applications. In the protocol architecture of Figure 5, the IP program module transmits the TCP header or the UDP header and the application layer data to the correct TCP or UDP program module on the basis of the identifier information ID of the invention and the protocol number in the IP header (TCP = 6, UDP = 17). This protocol number is in the protocol field in the IPv4 header and in the next header field in the IPv6 header. The TCP and UDP units are selected e.g. as disclosed in the flow diagram of Figure 6. The IP program receives the IP packet in step 41 and examines the IP header. In step 42, it is examined whether the protocol number is the number determined for the TCP protocol. If so, the process moves on to step 43 to examine whether the identifier number of the invention is the same as the identifier number ID1 of the TCP program module 1. If so, the program moduie TCP1 is selected in step 44, and the TCP header and the application data are transmitted thereto. Next, the TCP program module TCP1 transmits the application layer data to port Y or X, according to the port number in the received TCP header. If the received identifier ID did not correspond to the identifier ID1 in step 43, it is examined in step 45 whether the received identifier corresponds to the identifier ID2 of another TCP program module TCP2. If so, the TCP2 is selected and the TCP header and the application layer data are transmitted thereto. If the received ID and ID2 do not match in step 45, the process moves on to check a next identifier IDn in step 47, and a corresponding program module TCPn is selected if the identifiers match. If the received ID does not match with any identifier ID used at the server, the received identifier is defined as unknown, and a default TCP program module is selected. This could typically be a TCP connected to an application supporting a terminal in a fixed broadband network, since it is more likely that a terminal using special features also knows how to use the identifier ID. If the received IP packet contains no identifier ID of the invention at all, a default TCP module will also be selected since the packet has then probably been supplied from a client device in a fixed network.

If, in step 42, the protocol number does not correspond to the TCP protocol number, it is assumed that the protocol is UDP, and the process moves on to steps 50, 52 and 54 to check whether the received ID corresponds to any one of the identifiers ID1, ID2,...IDn, and a corresponding UDP program module UDP1...n is selected in steps 51, 53 and 55. If there is no received ID at all or it is unknown, a default UDP is again selected in step 56. In the UDP program modules 1 and 2, the application layer data is also transmitted to a port indicated by the port number in the received UDP header.

Figure 7 shows a second protocol architecture comprising only one TCP program module and one UDP program module, as usual. A new feature, however, is that the TCP program module comprises two ports designated by port number X and two ports designated by port number Y. Similarly, the UDP program module comprises two ports designated by received port number X. The TCP program module selects a correct port on the basis of both the received port number and the received identifier ID. If the received identifier is ID1 and the received port number is X, the application layer data is directed to port X, which is connected to application 2 through the interface API1. If the received identifier is ID2 and the port number is X, the application layer data is directed to port X', which is connected to application 2' of a similar type through the different interface API2. Similarly, port Y is selected if port number Y and the identifier ID1 are received. Port Y' is selected if port number Y and the identifier ID2 are received. If there is no ID at all or it is unknown, the port is select on the basis of the received port number only. Method steps 61, 62 and 63 in the flow diagram of Figure 8 illustrate the operation of a TCP program module. The TCP program module can obtain the received identifier from the TCP header. Another alternative is that the IP program module has received the identifier ID in the IP header of a packet and transmits the identifier to the TCP program module as a parameter, as illustrated by arrow 71 in Figure 6.

The UDP program module operates in a similar manner. If port number X and the identifier ID1 are received, port X is selected, which is connected to application 4 through the interface API1. If port number X and the identifier ID2 are received, port X' is selected, which is connected to application 4 through the interface API2. Again, the UDP program module can receive the identifier ID either from the UDP header or as a separate parameter 72 from the IP layer.

An advantage of the embodiments described above is that they enable generally known port numbers to be used for different services and known protocol numbers to be used for TCP and UDP protocols. In such a case, a terminal which adds an identifier ID to a data packet but uses the common, known port number will always receive a service at least in a less suitable form even if the server did not support the version of the service that would suit the terminal best. This situation at the specific server only corresponds to the situation the terminal presently encounters in the prior art. This is preferable since the user is now able to view different sites on the Internet without all the time being compelled to know which service version he or she is to use.

In the architecture of Figure 7, the terminal can in principle directly in the TCP header of the IP packet indicate the number of port Y' or X'. This should, however, also work parallel with the identifier number ID in order to achieve compatibility with the use of the known port numbers. Otherwise the problem is that if the server does not support the use of the particular port, the terminal will receive no service at all. In such a case, the TCP program module converts e.g. the received port number Y into port number Y' if the identifier ID2 is also received in the same IP packet; otherwise the packet is supplied to port Y.

In a similar manner, the TCP modules 1 and 2 and the UDP modules 1 and 2 could be indicated by a predetermined protocol number of their own in the architecture of Figure 5. This, when desired, should also work parallel with the embodiment of Figure 4 such that if the IP program module receives the current protocol number referring to the TCP or UDP protocol, and e.g. the identifier ID1, it still selects the protocol module TCP1, as described in connection with Figure 5. If, on the other hand, a protocol number is received which directly points to the protocol module TCP1, the TCP header and the application layer data are transmitted to this module.

It would thus be preferable if the terminal could find servers providing a certain service in a desired format and possibly even the port numbers thereof without trying each server separately. A Service Location Protocol (SLP) standardized in connection with the Internet can preferably be used for this purpose. The SLP protocol is designed to make finding different network resources and services simpler. The SLP is a client-server-based service delivery process based on agent technology known per se, which enables the services desired by a user to be dynamically tied to the network address delivering the service. The structure of the SLP is described with reference to Figure 3. A user issues a service request from application A in the user's terminal TE to a user agent UA in the network, the user agent being a program procedure which operates independently in the network for the user, searching through the network for a service according to the attributes defined by the user. The servers S1, S2 and S3 in the network present service information on the services they provide, such as address and configuring information on the services. Directory agents DA collect the service information provided by the servers in a single place, which means that the directory agents DA are provided with information on all services available.

When a user in a wireless network wishes to use a certain service, the user issues a service request from the application in his or her terminal TE to a user agent UA in the network for the service information on the particular service to be found. If the user agent UA knows the address of the directory agent DA, the user agent UA can present a unicast service request to the directory agent DA. If, again, the user agent UA does not know the address of the directory agent DA, the user agent UA can present multicast service requests to a plurality of service-specificaily defined servers. The servers S1, S2 and S3 register the service information on the services contained therein in the directory agent DA, which acknowledges the received information. The servers S1 to S3 are to register and update their service information at determined intervals; otherwise the service information is removed from the directories of the directory agent DA. The servers S1 to S3 also inform the directory agent DA if the particular services are no longer used, in which case the directory agent DA removes the service information on the particular services from its directories. The directory agents DA are thus always provided with updated information on the services available. In response to the unicast service request issued by the user agent UA, the directory agent DA examines whether a service according to the service request can be found in the directories and informs the user agent UA of the service information on a service it has possibly found, the user agent UA forwarding the address information on the particular service to the terminal TE. On the basis of the address information, the terminal TE is able to configure to the desired service. Similarly, the servers S1 to S3 reply to the multicast service request issued by the user agent UA if the issued service request corresponds to the service information on the services delivered by the server. The user agents are thus always provided with updated information on the address and configuration information of the services available, and the terminal is able to connect to the service at a correct address. The SLP protocol is described in closer detail in RFC2165 Internet request for change.

The SLP protocol can also be preferably utilized in the different embodiments of the present invention such that the network address, preferably the IP address, of the servers providing special services according to the invention is stored in connection with a directory agent DA according to the SLP protocol. In addition to the network address, available services and different formats thereof and port numbers, protocol numbers and/or identifiers to be used for requesting different services and different formats of a service are stored in connection with the directory agent. The particular server can update this information for the directory agent on a regular basis. Furthermore, the network comprises user agents and/or program procedures for creating user agents UA for wireless terminals IT. Since the terminals IT move in different areas, it is not necessary to create permanent user agents for each terminal in a defined area but the terminals register in a user agent each time they enter a certain area defined by the directory agent DA. When the user device has been registered in the user agent UA, the user of the terminal can issue service requests to the directory agent DA through the user agent UA.

When the user of the terminal is to set up a connection to a certain service, the terminal delivers a service request to its user agent UA in the network. The user of the terminal does not need to have any detailed information on the particular service, such as at which network address the service is available or the telecommunication parameters used. In the issued service request, the user of the terminal can specify different attributes of the desired service, such as the service type, network protocols and service formats supported by the terminal, and certain information related to the application and/or features of the terminal that affects the selection of the service format. If the terminal is a mobile one, the service request may also preferably specify the approximate location of the terminal on the basis of the position of its nodal point via which the terminal has been connected to the wired network. The user agent UA preferably presents the service request specified by the user of the terminal to the directory agent DA, which searches through the services registered in the directory agent DA by service agents SA for the service description specified by the particular service request. If a service according to the service request is available, the directory agent DA returns the service information on the particular service(s) to the user agent UA. According to an embodiment of the invention, this also comprises port numbers and/or protocol numbers through which certain service formats are available. The user agent UA further delivers the information to the terminal TE, which is able to set up a connection to the network providing the service and the desired service by means of the received telecommunication parameters. If the terminal uses in the IP packet it transmits a certain protocol number or port number thus obtained, corresponding to the desired service format, the packet is automatically supplied to an application which provides the service in the desired form and which supports the features of the terminal. If the terminal only transmits a normal known protocol number and an identifier according to the invention, the packet will also end up in a correct application at the server.

The identifier information of the invention can also be used for routing an IP packet in the network. Depending on the Identifier information, an IP packet having the same address can be routed In different ways in an embodiment of the invention; two or more servers (possibly virtual) can be accessed in the service providers own local area network using the same IP address. Figure 3 shows an example wherein two servers S3 and S3' providing the same service, only suited for slightly different terminals, are connected to an LAN of the service provider. To the servers S3 and S3', databases DB1 and DB2 are also connected, comprising files In slightly different formats. Since the service should look uniform to the clients, the servers have the same IP address, at least outside the LAN. On the basis of the IP address, the IP packet arrives at a router R1, which directs the packet to a correct server S3 or S3' by means of the identifier information ID in the packet. For example, if the IP packet comprises the ID1 or no identifier at all, the IP packet is routed to the server S3. If the packet comprises the identifier ID2, the packet is routed to the server S3'. This routing can be based e.g. on IP address conversion on the basis of the identifier ID. The identifier information ID can be utilized in the routing also elsewhere on the Internet. Routing to a correct server within the network is determined according to the identifier information of the Invention.

The figures and the related description are only intended to illustrate the invention. The implementation of the invention may vary within the scope of the attached claims.

## Claims

1. A method for implementing a service from a server (S1-3) to client devices (TE) having different features, the method comprising the steps of
a client device (TE) transmitting an Internet Protocol (IP) packet comprising an IP header, a transfer protocol layer header and application layer data,
routing the IP packet to the server (S1-3) according to a destination address of said IP header,
transferring, at the server, the transport layer header and the application layer data from the IP layer to the transport layer protocol according to a protocol identifier of said IP header,
transferring, at the server, the application layer data from the transfer protocol layer to the application layer according to a port number contained in said transfer protocol layer header,
**characterized in that**
the client device (TE) includes, in the IP packet it transmits, information on a software interface below an application used for presenting the service in the client device requesting the service,
said information is used at the server (S1-3) for selecting and/or configuring either a file requested by the client device or an application interacting with the client device such that the service is provided in the form required by the features of the particular client device (TE) which requested the service.

2. A method as claimed in claim 1, **characterized in that**
the server (S1-3) comprises a plurality of transport protocol layer units having the same protocol, each unit being connected to the application layer through a different application interface when each application interface supports the requested service in a different form,
the application layer data is transferred at the server from the IP layer to one of said transport layer protocol units according to said protocol identifier of the IP header and said information.

3. A method as claimed in claim 1, **characterized in that**
the server (S1-3) comprises a plurality of ports in the transport protocol layer, each port being connected to the application layer through a different application interface when each application interface supports the requested service in a different form,
the application layer data is transferred at the server from the transport protocol layer to the application layer through the port number contained in said transport protocol layer header and a port selected according to said information.

4. A method as claimed in claim 1, 2 or 3, **characterized in that** said information is located in the IP header of the IP packet, the transport layer header or the application data.

5. A method as claimed in claim 1, 2, 3 or 4, **characterized in that**
the client device includes said information in the application layer data of the IP packet,
the applications layer is configured according to said information.

6. A method as claimed in claim 5, **characterized in that** the application layer selects the type of the file to be transmitted to the client device (TE) on the basis of said information.

7. A method as claimed in any one of claims 1 to 6, **characterized in that** the client device (TE) retrieves the information about the servers (S1-3) providing the service in a desired form from a directory agent (DA).

8. A terminal capable of requesting and receiving services from a server (S1-3) in a TCP/IP network, **characterized in that** the terminal (TE) includes, in an IP packet it transmits, application layer data and information on a software interface below an application used for presenting the service in the client device requesting the service so as to enable, at the server (S1-3), a file or an application to be selected or configured by means of said information such that the service is provided in the form required by the features and /or application of the terminal (TE).

9. A server in a TCP/IP network, which provides services to client devices (TE) having different features, the server (S1-3) comprising
Internet Protocol (IP) means for receiving an IP packet transmitted by a client device (TE) and provided with an IP header, a transport protocol layer header and application layer data,
at least one transport layer protocol unit to which the transport layer header and the application layer data are transferred from the IP means according to a protocol identifier of said IP header,
at least one application to which the application layer data is transferred from the transport layer protocol unit according to a port number contained in said transport protocol layer header,
**characterized in that**
the server (S1-3) is arranged to examine whether the client device (TE) has included, in the IP packet it transmits, information about a software interface below on an application used for presenting the service in the client device requesting the service,
the server (S1-3) is arranged to use said information for selecting or configuring the file or the application such that the service is provided in the form required by the features and/or application of the particular client device (TE) which requested the service.

10. A server as claimed in claim 9, **characterized in that**
the server (S1-3) comprises a plurality of transport protocol layer units having the same protocol, each unit being connected to the application layer through a different application interface when each application interface supports the requested service in a different form,
said IP protocol means route the application layer data and the transport layer header to one of said transport layer protocol units according to a protocol identifier of said IP header and said information.

11. A server as claimed in claim 9, **characterized in that**
the server (S1-3) comprises a plurality of ports in the transport protocol layer, each port being connected to the application layer through a different application interface when each application interface supports the requested service in a different form,
a protocol unit of the transport protocol layer is arranged to deliver the application layer data to the application layer through the port number contained in said transport protocol layer header and a port selected according to said information.

12. A server as claimed in claim 9, 10 or 11, **characterized in that** said information is located in the IP header of the IP packet, the transport layer header or the application data.

13. A server as claimed in claim 9, 10, 11 or 12 **characterized in that** said information is located in the application layer data of the IP packet, and that the application layer is configured or selects the format of the data to be transmitted according to said information.

14. A server as claimed in claim 12, **characterized in that** the application layer selects the type of the file to be transmitted to the client device (TE) on the basis of said information.

15. A method for providing a service from a server (S1-3) to client devices, the method comprising the steps of
the server (S1-3) broadcasting or multicasting an Internet Protocol (IP) packet comprising an IP header, a transfer protocol layer header and application layer data,
routing the IP packet to the client devices,
transferring, at the client device, the transport layer header and the application layer data from an IP layer to a transport layer protocol according to a protocol identifier of said IP header,
transferring, at the client device, the application layer data from the transport protocol layer to the application layer according to a port number contained in the transport protocol layer header,
**characterized in that**
the server (S1-3) includes, in the IP packet it transmits, information on a software interface below an application used for presenting the service, and that
said information is used in the client device for configuring and/or downloading the application and application programming interface.

16. A method as claimed in claim 15, **characterized in that**
the client device downloads, on the basis of said information, necessary program modules suitable for the software interface of the client device from servers on the Internet in order to present the service content itself.

17. A server (S1-3) in a TCP/IP network or a broadcast network, which provides services to client devices having different features, the server comprising means for transmitting IP packets in the broadcast or multicast form, or in broadcast frames to the client devices, **characterized in that** the server (S1-3) is arranged to include, in an IP packet it transmits, or in identifier information of a broadcast frame IP packet, application layer data and information on a software interface below an application used for presenting a service so as to enable a client device to use said information for configuring and/or downloading the application and application programming interface or a protocol program.

18. A terminal capable of requesting and receiving services from a broadcast network or from a server (S1-3) in a TCP/IP network, **characterized in that** the terminal configures and/or downloads an application and an application programming interface on the basis of information located in an Internet Protocol (IP) packet received from the server (S1-3), or in identifier information on a broadcast frame received from the broadcast network, said information relating to a software interface below the application used for presenting a service, the IP packet further containing application layer data.

19. A method for routing a service request to a server (S1-3) from client devices having different features, the method comprising the steps of
receiving from a client device (TE) transmitting an Internet Protocol (IP) packet comprising an IP header, a transfer protocol layer header and application layer data,
routing the IP packet to the server (S1-3) according to a destination address of said IP header,
**characterized in that**
the IP packet includes information on a software interface below the application used for presenting the service in the client device requesting the service,
using said information, together with the IP address, for routing the IP packet to a server (S1-3) which provides a service in the form required by the features and/or application of the particular client device (TE) which requested the service.

20. A method as claimed in claim 19, **characterized in that** two or more servers providing different forms of a single service have the same IP address.

21. A router routing Internet Protocol (IP) packets containing application layer data, **characterized in that** in the routing, the router uses not only an IP destination address but also identifier information, which has been included in an IP packet by a client device which transmitted the IP packet, said information relating to a software interface below an application used for presenting the service in the client device requesting the service.

## Patentansprüche

1. Verfahren, um einen Dienst von einem Server (S 1-3) auf verschiedene Merkmale aufweisenden Endgeräten (TE) auszuführen, wobei das Verfahren die Schritte
- Übertragung eines aus einem IP-Header, einem Transferprotokollschicht-Header und Anwendungsschichtdaten bestehenden Internetprotokoll(IP)-Pakets durch das Endgerät,
- Routing des IP Pakets zum Server (1-3), entsprechend einer Zieladresse des genannten IP-Headers,
- Übertragung des Transportschicht-Headers und der Daten der Anwendungsschicht von der IP-Schicht zum Transportschichtprotokoll am Server, entsprechend einem Protokoll-Identifier des genannten IP-Headers,
- Übertragung der Anwendungsschichtdaten von der Transferprotokollschicht zur Anwendungsschicht, entsprechend einer Port-Nummer des genannten Transferprotokollschicht-Headers
beinhaltet,
**dadurch gekennzeichnet, dass**
- das Endgerät (TE) in dem IP-Paket, das es überträgt, Informationen über ein Software-Interface unterhalb einer Anwendung, mit der der Dienst auf dem den Dienst abfragenden Endgerät abgespielt wird, einfügt,
- die genannte Information im Server (S1-3) dazu verwendet wird, um entweder eine vom Endgerät angeforderte Datei und/oder eine Anwendung, die mit dem Endgerät kommuniziert, auszuwählen oder zu konfigurieren, derart dass der Dienst in der Form bereitgestellt wird, die von den Merkmalen des jeweiligen Endgeräts (TE), das den Dienst angefordert hat, benötigt wird.

2. Verfahren nach Anspruch 1, **dadurch gekennzeichnet, dass**
- der Server (S1-3) eine Vielzahl von Transportprotokollschicht-Einheiten, die das selbe Protokoll haben, umfasst, wobei, wenn jedes Anwendungs-Interface den angeforderten Dienst in einer unterschiedlichen Form unterstützt, jede Einheit durch ein unterschiedliches Anwendungs-Interface mit der Anwendungsschicht verbunden ist,
- die Daten der Anwendungsschicht am Server von der IP-Schicht zu einer der genannten Transportschichtprotokoll-Einheiten, dem genannten Protokoll-Identifier und der genannten Information entsprechend, übertragen werden.

3. Verfahren nach Anspruch 1, **dadurch gekennzeichnet, dass**
- der Server (S1-3) in der Transportprotokollschicht eine Vielzahl von Ports einschließt, wobei, wenn jedes Anwendungs-Interface den angeforderten Dienst in einer unterschiedlichen Form unterstützt, jeder Port durch ein unterschiedliches Anwendungs-Interface mit der Anwendungsschicht verbunden ist,
- die Daten der Anwendungsschicht am Server mit Hilfe der im genannten Transportprotokollschicht-Header enthaltenen Port-Nummer und einem Port, der entsprechend der genannten Information ausgewählt wird, von der Transportprotokollschicht in die Anwendungsschicht übertragen werden.

4. Verfahren nach Anspruch 1, 2 oder 3, **dadurch gekennzeichnet, dass** die genannte Information im IP-Header des IP-Pakets, im Transportschicht-Header oder in den Anwendungsdaten platziert ist.

5. Verfahren nach Anspruch 1, 2, 3 oder 4, **dadurch gekennzeichnet, dass** das Endgerät die genannte Information in die Daten der Anwendungsschicht des IP-Pakets einschließt.

6. Verfahren nach Anspruch 5, **dadurch gekennzeichnet, dass** die Anwendungsschicht die Art der ans Endgerät (TE) zu übermittelnden Datei auf Basis der genannten Information bestimmt.

7. Verfahren nach einem der Ansprüche 1 bis 6, **dadurch gekennzeichnet, dass** das Endgerät (TE) die Information über die Server (S1-3), die den Dienst in der gewünschten Form anbieten von einem Directory Agent (DA) erhält.

8. Terminal, das in der Lage ist, Dienste von einem Server (S1-3) in einem TCP/IP Netzwerk abzurufen und zu empfangen, **dadurch gekennzeichnet, dass** das Terminal in ein IP-Paket, das es überträgt, Daten der Anwendungsschicht und Informationen über ein Software-Interface unterhalb einer Anwendung einschließt, die zum Ausführen des angeforderten Dienstes auf dem den Dienst abfragenden Endgerät benutzt wird, um es zu ermöglichen, dass am Server eine Datei oder eine Anwendung mit Hilfe von genannter Information ausgewählt oder eingerichtet wird, so dass der Dienst in der von den Merkmalen und/oder der Anwendung des Terminal (TE) vorausgesetzten Form bereitgestellt wird.

9. Server in einem TCP/IP Netzwerk, der Dienste für Endgeräte (TE) mit unterschiedlichen Merkmalen bereitstellt, wobei der Server (S1-3)
- Internetprotokoll-Mittel aufweist, um ein IP-Paket zu empfangen, das von einem Endgerät übermittelt worden ist und mit einem IP-Header, einem Transportprotokollschicht-Header und Anwendungsschichtdaten ausgestattet ist,
- mindestens eine Transportschichtprotokoll-Einheit hat, zu welcher der Transportschicht-Header und die Daten der Anwendungsschicht von den IP-Mitteln, dem Protokoll-Identifier des genannten IP-Headers entsprechend, übermittelt werden
- mindestens eine Anwendung enthält, zu der die Daten der Anwendungsschicht von der Transportschichtprotokoll-Einheit, einer im genannten Transportprotokollschicht-Header enthaltenen Port-Nummer entsprechend, übertragen werden, **dadurch gekennzeichnet, dass** der Server eingerichtet ist, um die genannte Information zum Auswählen oder Konfigurieren der Datei oder der Anwendung zu benutzen, so dass der Dienst in der von den Merkmalen und/oder der Anwendung des Terminals (TE) vorausgesetzten Form bereitgestellt wird.

10. Server nach Anspruch 9, **dadurch gekennzeichnet, dass**
- der Server (S1-3) eine Vielzahl von Transportprotokollschicht-Einheit, die das selbe Protokoll haben enthält, wobei, wenn jedes Anwendungs-Interface den angeforderten Dienst in einer unterschiedlichen Form unterstützt, jede Einheit durch ein unterschiedliches Anwendungs-Interface mit der Anwendungsschicht verbunden ist,
- die genannten IP-Protokoll-Mittel die Daten der Anwendungsschicht und den Transportschicht-Header dem Protokoll-Identifier des genannten IP-Headers und der genannten Information entsprechend zu einer der genannten Transportschichtprotokoll-Einheiten routen.

11. Server nach Anspruch 9, **dadurch gekennzeichnet, dass**
- der Server (S1-3) eine Vielzahl von Ports in der Transportprotokollschicht einschließt, wobei, wenn jedes Anwendungs-Interface den angeforderten Dienst in einer unterschiedlichen Form unterstützt, jeder Port durch ein unterschiedliches Anwendungs-Interface mit der Anwendungsschicht verbunden ist,
- eine Protokolleinheit der Transportprotokollschicht eingerichtet ist, um die Anwendungsschichtdaten mit Hilfe der im genannten Transportprotokollschicht-Header enthaltenen Port-Nummer und einem der genannten Information entsprechend ausgewählten Port an die Anwendungsschicht zu liefern.

12. Server nach Anspruch 9, 10 oder 11, **dadurch gekennzeichnet, dass** die genannte Information im IP-Header des IP-Pakets, im Transportschicht-Header oder in den Anwendungsdaten platziert ist.

13. Server nach Anspruch 9, 10, 11 oder 12, **dadurch gekennzeichnet, dass** die genannte Information in den Anwendungsschichtdaten des IP-Pakets platziert ist und dass die Anwendungsebene der genannten Information entsprechend eingerichtet ist oder ihr entsprechend das Format der zu übermittelnden Daten auswählt.

14. Server nach Anspruch 12, **dadurch gekennzeichnet, dass** die Anwendungsschicht den an das Endgerät (TE) zu übermittelnden Dateityp auf Basis der genannten Information bestimmt.

15. Verfahren zum Bereitstellen eines Dienstes von einem Server (S1-3) zu Endgeräten, wobei das Verfahren die Schritte
- des Broadcastings oder Multicastings eines einen IP-Header, einen Transferprotokollschicht-Header und Anwendungsschichtdaten enthaltenden Internetprotokoll(IP)-Pakets durch den Server,
- des Routings des IP-Pakets zu den Endgeräten,
- des dem Protokoll-Identifier des genannten IP-Headers entsprechenden Übertragens des Transportschicht-Headers und der Anwendungsschichtdaten von einer IP-Schicht zu einem Transportschicht-Protokoll am Endgerät,
- des der im genannten Transportprotokollschicht-Header enthaltenen Port-Nummer entsprechenden Übertragens der Anwendungsschichtdaten von der Transportprotokollschicht zur Anwendungsschicht am Endgerät
umfasst, **dadurch gekennzeichnet, dass**
- der Server (S1-3) im IP-Paket, das er überträgt, Information über ein Software-Interface unterhalb einer zum Ausführen des Dienstes benutzten Anwendung enthält,
- die genannte Information im Endgerät dazu benutzt wird, um die Anwendung oder das Application Programming Interface zu konfigurieren und/oder herunterzuladen.

16. Verfahren nach Anspruch 15, **dadurch gekennzeichnet, dass** das Endgerät auf Basis der genannten Information nötige Programme, die für das Software-Interface des Endgeräts geeignet sind von einem Server im Internet herunterlädt, um den eigentlichen Dienstinhalt wiederzugeben.

17. Server (S1-3) in einem TCP/IP Netzwerk oder einem Broadcast-Netzwerk, der Dienste für Endgeräte mit unterschiedlichen Merkmalen bereithält, wobei der Server Mittel besitzt, um IP-Pakete in der Broadcast- oder Multicast-Form oder in Form von Broadcast-Frames an die Endgeräte zu übertragen, **dadurch gekennzeichnet, dass** der Server (S1-3) so eingerichtet ist, dass er in einem IP-Paket, das er überträgt oder in der Identifier-Information eines Broadcast-Frame-IP-Pakets, Anwendungsschichtdaten und Information über ein Software-Interface unterhalb einer für das Ausführen eines Dienstes verwendeten Anwendung einschließt, um ein Endgerät in die Lage zu versetzen, die genannte Information zum Konfigurieren und/oder Herunterladen der Anwendung und des Application Programming Interfaces oder eines Protokollprogramms zu verwenden

18. Terminal, das in der Lage ist, Dienste von einem Broadcast-Netzwerk oder einem Server (S1-3) in einem TCP/IP-Netzwerk abzufragen und zu empfangen, **dadurch gekennzeichnet, dass** das Terminal auf der Basis von einer Information, die in einem vom Server empfangenen Internetprotokoll(IP)-Paket oder in der Identifier-Information in einem von einem Broadcast-Netzwerk empfangenen Broadcast-Frame platziert ist, eine Anwendung und ein Application Programming Interface konfiguriert und/oder herunterlädt, wobei die genannte Information mit einem Software-Interface unterhalb einer zum Abspielen des Dienstes verwendeten Anwendung zusammenhängt und das IP-Paket darüberhinausgehend Anwendungsschichtdaten enthält.

19. Verfahren, um eine Dienstanfrage von Endgeräten mit unterschiedlichen Merkmalen zu einem Server (S1-3) zu routen, wobei das Verfahren die Schritte
- des Empfangens von einem Endgerät (TE), das ein Internetprotokoll(IP)-Paket bestehend aus einem IP-Header, einem Transfer Protocol Layer Header und Anwendungsschichtdaten übermittelt,
- des Routings des IP-Pakets zum Server (S1-3), der Zieladresse des genannten IP-Headers entsprechend umfasst, **dadurch gekennzeichnet, dass**
- das IP-Paket Information über ein Software-Interface unterhalb einer Anwendung enthält, die zum Abspielen des Dienstes in dem den Dienst abfragenden Endgerät verwendet wird, wobei die genannte Information zusammen mit der IP-Adresse benutzt wird, um das IP-Paket zu einem Server (S1-3) zu routen, der den Dienst in der von den Merkmalen und/oder der Anwendung des jeweiligen den Dienst abfragenden Endgeräts (TE) vorausgesetzten Form bereitstellt.

20. Verfahren nach Anspruch 19, **dadurch gekennzeichnet, dass** zwei oder mehr Server, die verschiedene Formen eines einzigen Dienstes bereitstellen die selbe IP-Adresse haben.

21. Router, der Anwendungsschichtdaten enthaltende Internetprotokoll(IP)-Pakete routet, **dadurch gekennzeichnet, dass** der Router beim Routing nicht nur eine IP-Zieladresse, sondern Identifier-Information benutzt, die von einem Endgerät, das ein IP-Paket übermittelt hat, in selbiges eingefügt worden sind, wobei die genannte Information mit einem Software-Interface unterhalb einer Anwendung, die zum Abspielen des Dienstes auf dem den Dienst abfragenden Endgeräts verwendet wird, zusammenhängt.

## Revendications

1. Procédé pour mettre en oeuvre un service d'un serveur (S1-3) sur des dispositifs clients (TE) ayant différentes caractéristiques, le procédé comprenant les étapes consistant à :
transmettre par un dispositif client (TE) un paquet de protocole Internet (IP) comprenant un en-tête IP, un en-tête de couche de protocole de transport et des données de couche d'application,
acheminer le paquet IP vers le serveur (S1-3) en fonction d'une adresse de destination dudit en-tête IP,
transférer, au niveau du serveur, l'en-tête de couche de transport et les données de couche d'application de la couche IP à la couche de protocole de transport en fonction d'un identifiant de protocole dudit en-tête IP,
transférer, au niveau du serveur, les données de couche d'application de la couche de protocole de transport à la couche d'application en fonction d'un numéro de port contenu dans ledit en-tête de couche de protocole de transport,
**caractérisé en ce que**
le dispositif client (TE) inclut, dans le paquet IP qu'il transmet, des informations sur une interface logicielle au-dessous d'une application utilisée pour présenter le service dans le dispositif client demandant le service,
lesdites informations sont utilisées au niveau du serveur (S1-3) pour sélectionner et/ou configurer un fichier demandé par le dispositif client ou une application en interaction avec le dispositif client de sorte que le service soit fourni sous la forme requise par les caractéristiques du dispositif client (TE) particulier ayant demandé le service.

2. Procédé selon la revendication 1, **caractérisé en ce que**
le serveur (S1-3) comprend une pluralité d'unités de couche de protocole de transport ayant le même protocole, chaque unité étant connectée à la couche d'application à travers une interface d'application différente lorsque chaque interface d'application supporte le service demandé sous une forme différente,
les données de couche d'application sont transférées au serveur de la couche IP à l'une desdites unités de couche de protocole de transport en fonction dudit identifiant de protocole de l'en-tête IP et desdites informations.

3. Procédé selon la revendication 1, **caractérisé en ce que**
le serveur (S1-3) comprend une pluralité de ports dans la couche de protocole de transport, chaque port étant connecté à la couche d'application à travers une interface d'application différente lorsque chaque interface d'application supporte le service demandé sous une forme différente,
les données de couche d'application sont transférées au serveur de la couche de protocole de transport à la couche d'application à travers le numéro de port contenu dans ledit en-tête de couche de protocole de transport et un port sélectionné en fonction desdites informations.

4. Procédé selon la revendication 1, 2 ou 3, **caractérisé en ce que** lesdites informations sont situées dans l'en-tête IP du paquet IP, l'en-tête de couche de transport ou les données d'application.

5. Procédé selon la revendication 1, 2, 3 ou 4, **caractérisé en ce que**
le dispositif client comprend lesdites informations dans les données de couche d'application du paquet IP,
la couche d'application est configurée en fonction desdites informations.

6. Procédé selon la revendication 5, **caractérisé en ce que** la couche d'application sélectionne le type de fichier à transmettre au dispositif client (TE) sur la base desdites informations.

7. Procédé selon l'une quelconque des revendications 1 à 6, **caractérisé en ce que** le dispositif client (TE) extrait les informations concernant les serveurs (S1-3) fournissant le service sous une forme souhaitée d'un agent de répertoire (DA).

8. Terminal capable de demander et de recevoir des services d'un serveur (S1-3) dans un réseau TCP/IP, **caractérisé en ce que** le terminal (TE) inclut, dans un paquet IP qu'il transmet, des données de couche d'application et des informations sur une interface logicielle au-dessous d'une application utilisée pour présenter le service dans le dispositif client demandant le service de manière à permettre, au niveau du serveur (S1-3), à un fichier ou une application d'être sélectionné ou configuré au moyen desdites informations de sorte que le service soit fourni sous la forme requise par les caractéristiques et/ou l'application du terminal (TE).

9. Serveur dans un réseau TCP/IP, qui fournit des services à des dispositifs clients (TE) ayant différentes caractéristiques, le serveur (S1-3) comprenant
des moyens de protocole Internet (IP) pour recevoir un paquet IP transmis par un dispositif client (TE) et muni d'un en-tête IP, d'un en-tête de couche de protocole de transport et de données de couche d'application,
au moins une unité de couche de protocole de transport à laquelle l'en-tête de couche de transport et les données de couche d'application sont transférés des moyens IP en fonction d'un identifiant de protocole dudit en-tête IP,
au moins une application à laquelle les données de couche d'application sont transférées de l'unité de couche de protocole de transport en fonction d'un numéro de port contenu dans ledit en-tête de couche de protocole de transport,
**caractérisé en ce que**
le serveur (S1-3) est agencé pour examiner si le dispositif client (TE) a inclus, dans le paquet IP qu'il transmet, des informations sur une interface logicielle au-dessous d'une application utilisée pour présenter le service dans le dispositif client demandant le service,
le serveur (S1-3) est agencé pour utiliser lesdites informations pour sélectionner ou configurer le fichier ou l'application de sorte que le service soit fourni sous la forme requise par les caractéristiques et/ou l'application du dispositif client (TE) particulier ayant demandé le service.

10. Serveur selon la revendication 9, **caractérisé en ce que**
le serveur (S1-3) comprend une pluralité d'unités de couche de protocole de transport ayant le même protocole, chaque unité étant connectée à la couche d'application à travers une interface d'application différente lorsque chaque interface d'application supporte le service demandé sous une forme différente,
lesdits moyens de protocole IP acheminent les données de couche d'application et l'en-tête de couche de transport vers l'une desdites unités de couche de protocole de transport en fonction d'un identifiant de protocole dudit en-tête IP et desdites informations.

11. Serveur selon la revendication 9, **caractérisé en ce que**
le serveur (S1-3) comprend une pluralité de ports dans la couche de protocole de transport, chaque port étant connecté à la couche d'application à travers une interface d'application différente lorsque chaque interface d'application supporte le service demandé sous une forme différente,
une unité de protocole de la couche de protocole de transport est agencée pour livrer les données de couche d'application à la couche d'application à travers le numéro de port contenu dans ledit en-tête de couche de protocole de transport et un port sélectionné en fonction desdites informations.

12. Serveur selon la revendication 9, 10 ou 11, **caractérisé en ce que** lesdites informations se trouvent dans l'en-tête IP du paquet IP, l'en-tête de couche de transport ou les données d'application.

13. Serveur selon la revendication 9, 10, 11 ou 12, **caractérisé en ce que** lesdites informations se trouvent dans les données de couche d'application du paquet IP, et **en ce que** la couche d'application est configurée ou sélectionne le format des données à transmettre en fonction desdites informations.

14. Serveur selon la revendication 12, **caractérisé en ce que** la couche d'application sélectionne le type de fichier à transmettre au dispositif client (TE) sur la base desdites informations.

15. Procédé pour fournir un service d'un serveur (S1-3) à des dispositifs clients, le procédé comprenant les étapes consistant à
diffuser par broadcast ou multicast depuis le serveur (S1-3) un paquet de protocole Internet (IP) comprenant un en-tête IP, un en-tête de couche de protocole de transport et des données de couche d'application,
acheminer le paquet IP vers les dispositifs clients,
transférer, au niveau du dispositif client, l'en-tête de couche de transport et les données de couche d'application d'une couche IP à une couche de protocole de transport en fonction d'un identifiant de protocole dudit en-tête IP,
transférer, au niveau du dispositif client, les données de couche d'application de la couche de protocole de transport à la couche d'application en fonction d'un numéro de port contenu dans ledit en-tête de couche de protocole de transport,
**caractérisé en ce que**
le serveur (S1-3) inclut, dans le paquet IP qu'il transmet, des informations sur une interface logicielle au-dessous d'une application utilisée pour présenter le service, et **en ce que**
lesdites informations sont utilisées dans le dispositif client pour configurer et/ou télécharger l'application et l'interface de programmation d'applications.

16. Procédé selon la revendication 15, **caractérisé en ce que**
le dispositif client télécharge, sur la base desdites informations, des modules de programmes nécessaires appropriés pour l'interface logicielle du dispositif client à partir de serveurs sur l'Internet pour présenter le contenu de service proprement dit.

17. Serveur (S1-3) dans un réseau TCP/IP ou un réseau de diffusion broadcast, qui fournit des services à des dispositifs clients ayant différentes caractéristiques, le serveur comprenant des moyens pour transmettre des paquets IP sous la forme broadcast ou multicast, ou dans des trames broadcast aux dispositifs clients, **caractérisé en ce que** le serveur (S1-3) est agencé pour inclure, dans un paquet IP qu'il transmet, ou dans des informations d'identifiant d'un paquet IP de trame broadcast, des données de couche d'application et des informations sur une interface logicielle au-dessous d'une application utilisée pour présenter un service de manière à permettre à un dispositif client d'utiliser lesdites informations pour configurer et/ou télécharger l'application et l'interface de programmation d'application ou un programme de protocole.

18. Terminal capable de demander et de recevoir des services d'un réseau de diffusion ou d'un serveur (S1-3) dans un réseau TCP/IP, **caractérisé en ce que** le terminal configure et/ou télécharge une application et une interface de programmation d'application sur la base des informations situées dans un paquet de protocole Internet (IP) reçu du serveur (S1-3), ou dans des informations d'identifiant sur une trame broadcast reçue du réseau de diffusion broadcast, lesdites informations concernant une interface logicielle au-dessous de l'application utilisée pour présenter un service, le paquet IP contenant en outre des données de couche d'application.

19. Procédé pour acheminer une demande de service à un serveur (S1-3) de dispositifs clients ayant différentes caractéristiques, le procédé comprenant les étapes consistant à
recevoir d'un dispositif client (TE) transmettant un paquet de protocole Internet (IP) comprenant un en-tête IP, un en-tête de couche de protocole de transport et des données de couche d'application,
acheminer le paquet IP vers le serveur (S1-3) en fonction d'une adresse de destination dudit en-tête IP,
**caractérisé en ce que**
le paquet IP comprend des informations sur une interface logicielle au-dessous de l'application utilisée pour présenter le service dans le dispositif client demandant le service,
utiliser lesdites informations, avec l'adresse IP, pour acheminer le paquet IP vers un serveur (S1-3) qui fournit un service sous la forme requise par les caractéristiques et/ou l'application du dispositif client (TE) particulier ayant demandé le service.

20. Procédé selon la revendication 19, **caractérisé en ce que** deux serveurs ou plus fournissant différentes formes d'un service unique ont la même adresse IP.

21. Routeur acheminant des paquets de protocole Internet (IP) contenant des données de couche d'application, **caractérisé en ce que**, dans l'acheminement, le routeur utilise non seulement une adresse de destination IP mais également des informations d'identifiant, qui ont été incluses dans un paquet IP par un dispositif client ayant transmis le paquet IP, lesdites informations concernant une interface logicielle au-dessous d'une application utilisée pour présenter le service dans le dispositif client demandant le service.
